(19) Europäisches Patentamt
European Patent Office
Office européen des brevets

(11) **EP 4 779 568 A1**

(12) **EUROPEAN PATENT APPLICATION**

(43) Date of publication:
**22.07.2026** Bulletin 2026/30

(51) International Patent Classification (IPC):
**G06T 7/73** (2017.01)    **G06N 3/045** (2023.01)
**G06T 17/00** (2006.01)

(21) Application number: **25305052.0**

(22) Date of filing: **16.01.2025**

(52) Cooperative Patent Classification (CPC):
**G06N 7/01; G06N 3/045; G06T 15/20; G06T 17/00**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **InterDigital CE Patent Holdings, SAS
75017 Paris (FR)**

(72) Inventors:
• **SABATER, Neus**
  **35830 BETTON (FR)**
• **SANDRI, Gustavo**
  **35510 CESSON-SEVIGNE (FR)**
• **THUDOR, Franck**
  **35000 RENNES (FR)**
• **CHUPEAU, Bertrand**
  **35700 RENNES (FR)**

(74) Representative: **Vossius & Partner
Patentanwälte Rechtsanwälte mbB
Siebertstraße 3
81675 München (DE)**

(54) **ESTIMATING THE MULTI-VIEW VIEWPOINT REGION IN A CAPTURE-AGNOSTIC 3D GAUSSIAN COMPRESSION FRAMEWORK**

(57)    In a method according to some embodiments, a plurality of potential viewpoints of a 3D Gaussian model are selected. For a first subset of the plurality of potential viewpoints, a first determination is made of a number of 3D Gaussians contributing to rendering of a synthetic view at the respective viewpoint. For a second subset of the plurality of potential viewpoints, a second determination is made of whether any incompletely filled pixels are present in a rendering of a synthetic view at the respective viewpoint. A a first region of potential captured viewpoints is selected based at least in part on the first determination and the second determination.

FIG. 6

**Description**

**BACKGROUND**

The present application is related to volumetric representations based on 3D Gaussian splatting.

In the last several years, different volumetric representations have been proposed to be used in the context of New View Generation (NVG). This is the generation of new views from arbitrary viewing angles of a scene when only a limited number of input views have been captured. 3D Gaussian (3DG) splatting has emerged as a new scene representation that is able to realistically render volumetric data from a multi-view capture with high quality. 3DG is described in, for example, Kerbl, B. K., "3D Gaussian Splatting for Real-Time Radiance Field Rendering," ACM Transactions on Graphics (TOG), 2003, pp. 1-14. 3DG splatting helps to avoid unnecessary computation in the empty space and allows for real-time rendering and rapid training. Gaussian splatting has already been used in the past in the computer graphics community but recently, with the advent of artificial intelligence and the arrival of very powerful GPUs, new learning techniques have become popular, making Gaussian splatting more feasible in the realm of 3D scene representation.

However, one drawback of 3DGs is that they call for the use of a large amount of memory for the storage and transmission of the Gaussians. In this context, the MPEG group of experts is exploring the task of 3D Gaussian compression. There are two exploratory tracks in MPEG for 3DG compression depending on whether or not the input views are known.

**SUMMARY**

A method according to some embodiments comprises: selecting a plurality of potential viewpoints of a model, wherein the model is represented using a plurality of 3D Gaussians; for a first subset of the plurality of potential viewpoints, making a first determination of a number of 3D Gaussians contributing to rendering of a synthetic view at the respective viewpoint; for a second subset of the plurality of potential viewpoints, making a second determination of whether any incompletely filled pixels are present in a rendering of a synthetic view at the respective viewpoint; and determining a first region of potential captured viewpoints based at least in part on the first determination and the second determination.

An apparatus according to some embodiments comprises one or more processors configured to perform at least: selecting a plurality of potential viewpoints of a model, wherein the model is represented using a plurality of 3D Gaussians; for a first subset of the plurality of potential viewpoints, making a first determination of a number of 3D Gaussians contributing to rendering of a synthetic view at the respective viewpoint; for a second subset of the plurality of potential viewpoints, making a second determination of whether any incompletely filled pixels are present in a rendering of a synthetic view at the respective viewpoint; and determining a first region of potential captured viewpoints based at least in part on the first determination and the second determination.

**BRIEF DESCRIPTION OF THE DRAWINGS**

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings.

FIG. 1 is a flow diagram of a method performed in some embodiments.

FIG. 2 is a schematic view of image planes arranged along different rays from the center of a 3D Gaussian model according to some embodiments.

FIG. 3 is a schematic view illustrating a first region of potential captured viewpoints selected using the image planes of FIG. 2 according to some embodiments.

FIG. 4 is a schematic view illustrating one example of a second region of potential captured viewpoints selected by refining the first region of FIG. 3 according to some embodiments.

FIG. 5 is a schematic view illustrating another example of a second region of potential captured viewpoints selected by refining the first region of FIG. 3 according to some embodiments.

FIG. 6 is a flow diagram of a method performed in some embodiments.

FIG. 7 is a functional block diagram of an apparatus on which some embodiments may be implemented.

**DETAILED DESCRIPTION**

The present disclosure relates to the use of 3D Gaussians in cases in which the source multi-images (or multi-videos) are unknown. In such cases, information may still be available about the main topology of the input image positions: object-centric, forward facing or unbounded scene.

The study of compression of 3D Gaussians in cases where the input views and positions are unknown is referred to as the agnostic track. In the agnostic track, the general task is to encode a set of 3D Gaussians that have been generated from different viewpoints that are unknown. However, the coding task could benefit from some views generated from the initial set of 3D Gaussians. Also, for the sake of evaluation, it is helpful to render views from the input 3DGs to be compared to the rendered views from the reconstructed 3DGs.

It is desirable to be able to render views from the input 3DGs in the agnostic framework because such views can be considered as a ground-truth and may replace the role of the real captured views. While the rendering operation is well known and can be achieved in real time, this does not resolve the issue of identifying positions from which the views are to be rendered. Indeed, having the information of the coarse topology of the input camera positions (object centric, forward facing, or unbounded scene) is not enough, and it would be desirable for the region of potential image positions to be delimited.

Recent research has been working on the generation of 3DGs and its applications, but the research community has made few inroads into the compression problem, especially the agnostic compression problem.

The present disclosure describes systems and methods to determine the potential region from which the input 3D Gaussians have been generated in the case that this information has not been given. In other words, given a set of 3D Gaussians, the image positions that are more plausible to be the positions from which the optimization has been done are estimated.

In one example, first, a discrete number of images are generated from different directions and an upper bound of the sought region is estimated, followed by an eventual lower bound. Subsequently, a criterion is used to refine the region inside the upper and lower bounds. Then, in the range of plausible image positions, new views can be rendered and considered as the reference images in the case that the original images are not available anymore.

The following provides an overview of the set of 3D Gaussians and the image rendering operation. Formally, a 3DG is defined as an object in the 3D space, with a geometry that may be characterized as follows:

$$G(X) = e^{-\frac{1}{2}(X-\mu)^T \Sigma^{-1}(X-\mu)}$$

In particular, the Gaussian is characterized by its center $\mu$ = $(x, y, z)$, a 3D covariance matrix $\Sigma$, where $\Sigma$ can be decomposed into a scaling matrix $S$ (with parameters $s_1$, $s_2$ and $s_3$) and a rotation matrix $R$ (encoded into a unit quaternion $q$ with coefficients $q_1$, $q_2$, $q_3$ and $q_4$) for differentiable optimization. Besides the geometric description of each 3DG, other attributes are considered such as the opacity $\alpha$ and the color $c$, which may be represented using a list of spherical harmonics $\{c_n | n = 1, ..., N\}$.

Given a list of 3D Gaussians representing a 3D scene, and the image position of a new view, the synthetized image is generated in the new position via the projection of all 3D Gaussians in the image plane. This operation, which is referred to as splatting, corresponds to the $\alpha$-blending of the different Gaussians. In detail, given the sorted list of 3D Gaussians $N$ (with $N = 1$ being the nearest to the image plane, and each subsequent Gaussian being successively farther from the image plane), the color of a pixel in the new image is given by the formula

$$C = \sum_{i \in N} c_i \alpha'_i \prod_{j=1}^{i-1} (1 - \alpha'_j) \qquad (1)$$

where $c_i$ is the learnt color of the $i$-th Gaussian, $\alpha'_j = \alpha_j g_j(x)$; $\alpha_j$ being the $j$-th Gaussian opacity and $g_j(x)$ the $j$-th Gaussian projection on the new image plane. Expressed in words, the contribution of each Gaussian i to the color of the pixel is determined by multiplying the projected color and projected opacity of that Gaussian (giving the product $c_i \alpha'_i$) and multiplying that result by the projected transparencies $(1 - \alpha'_j)$ of all the intervening Gaussians $j$ (with $j < i$). Various heuristics may be used to exclude from the color calculation those Gaussians that are unlikely to have any meaningful effect on the image.

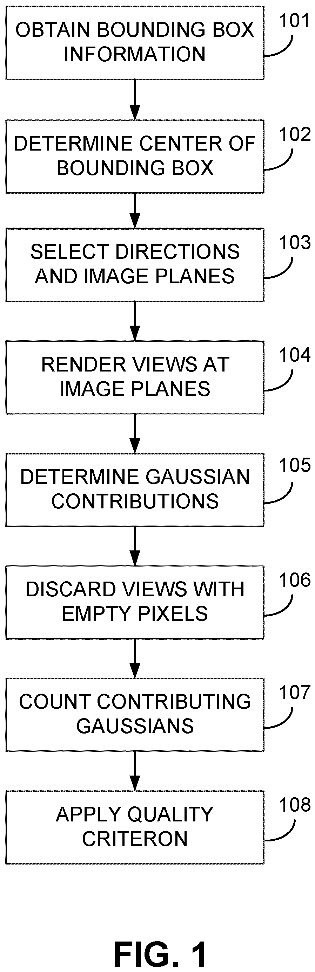

Now, considering a set of 3DGs where the initial views are not available anymore, example systems and methods are described herein for determining the potential region where the initial images have been captured. In one example, a method proceeds as illustrated in FIG. 1.

At 101, bounding box information is obtained. Consider the 3D bounding box containing all the 3DGs positions $[x_{min}, x_{max}] \times [y_{min}, y_{max}] \times [z_{min}, z_{max}]$, where $min$ and $max$ stand for the index positions with minimum and maximum image position values.

At 102, the center of the bounding box is obtained. Consider the center of the bounding box $(x_c, y_c, z_c)$; where $x_c = (x_{max} + x_{min})/2$, and similarly for $y$ and $z$.

At 103, a set of directions and image planes is obtained. From the center of the bounding box, consider rays extending in a discrete number of directions $r$ in the 3D space. At each direction $r$, consider a discrete number of image planes $\Pi_k$ orthogonal to $r$. Such image planes can be placed uniformly placed along the respective line, or they may be randomly placed or at distances $\frac{1}{d}$, d being the distance to the bounding box center. In some embodiments, in addition to testing different directions and different image planes, different image sizes may also be tested using the techniques as described below.

At 104, views are rendered for the image planes. For each image plane $\Pi_k$ obtained at 103, render the corresponding view $I_k$ splatting the input 3DGs into the plane $\Pi_k$. This operation may be done in real-time using $\alpha$-blending (Eq. 1).

At 105, Gaussian contributions are determined. For each image plane $\Pi_k$ obtained at 103, consider the 3DGs that have contributed to the image considering its opacity. In detail, the Gaussian contribution of a pixel in image $I_k$ may be expressed as

$$GCI_k = \sum_{i \in N} \alpha'_i \prod_{j=1}^{i-1} (1 - \alpha'_j)$$

Expressed in words, the Gaussian contribution of a pixel may be expressed as a weighted sum of projected opacities $\alpha'_i$ of respective Gaussians, where each projected opacity is weighted by the product of the projected transparencies $(1 - \alpha'_j)$ of all the intervening Gaussians $j$ (with $j < i$). Various heuristics may be used to exclude from the calculation of $GCI_k$ those Gaussians that are unlikely to have any meaningful effect on the result. The Gaussian contribution may be used in some embodiments as a measure of how completely filled a pixel is in a rendered view.

Note that the resulting $GCI_k$ values of pixels in the image $k$ will have values ranging from 0 to 1. If the pixel has a value of 0 it means that no Gaussian has been projected to it. If it has a value strictly between 0 and 1, it means that at least one Gaussian has been projected to it, but the final opacity has not reached its highest value. If it has a value of 1, it means that the Gaussians that have been projected to this pixel have provided enough opacity.

At 106, views with incompletely filled or empty pixels are discarded. For each direction $r$, start from the furthest image $I_k$ from the bounding box center $(x_c, y_c, z_c)$. Discard the view $k$ if the image $I_k$ has pixels that are empty or otherwise incompletely filled. This occurs when the $GCI_k$ has values equal to 0 or smaller than 1. In some embodiments, a pixel is considered to be incompletely filled if its $GCI_k$ value is less than a threshold value near 1 but less than 1, such as, for example .99, .98, .97 or the like. This allows a pixel to be considered completely filled even if its $GCI_k$ is slightly less than one, to accommodate rounding, culling, or other possible artifacts of the rendering process.

Stop when the first image without empty pixels $I_{k=kmax(r)}$ has been found (i.e. all the pixels of $GCI_{kmax(r)}$ are equal to 1, or at least as great as a threshold value near 1). The reasoning is that if the images are too far from the scene of interest, no Gaussians have been generated to fill the surroundings. This allows for bounding of the space of potential images that has been used to generate the 3DGs. In particular, for each direction $r$, the image plane index $kmax(r)$ provides an upper-bound of the potential viewpoints in that direction. The set of all indexes $kmax$ from all directions characterizes the upper-bound envelope of the potential region.

At 107, the number of contributing Gaussians is calculated. For each image $I_k$ that has not been discarded in 106, count the total number of Gaussians that have contributed to its rendering. The reasoning is that views $I_k$ that have been rendered too close will have a small number of Gaussians splatted on it (because many 3DGs are projected outside the image plane), indicating that the real capture has been done further away. Maximizing the number of Gaussians contributing to the images for each direction provides a lower bound of the potential viewpoint captures. In detail, for each direction $r$, start from the closest image $I_k$ to the bounding box center $(x_c, y_c, z_c)$ and count the number of contributing Gaussians. Consider the view that maximizes the number of contributing Gaussians $I_{k=kmin(r)}$. If more than one view has the same number of contributing Gaussians, consider the closest view to the bounding box center. The image $I_{k=kmin(r)}$ will provide the lower bound in the $r$ direction and the set of all indexes $kmin$ from all directions characterizes the lower-bound envelope of the potential region.

At 108, one or more quality criteria may be applied. Inside the region defined by the lower and upper bound envelopes, in some embodiments, a quality criterion may optionally be considered to sharpen even more the potential region. For instance, trying to maximize a quality metric based on image blur may help to discard images generated from a completely wrong direction since the rendered image may not have a nice realistic structure, and too much blur may be generated when the Gaussians are splatted in irrelevant directions. One example of blur metric is the variance of the Laplacian that measures the magnitude of the second derivative of intensity across the image. If the variance is high, it indicates that the image is in-focus. An alternative approach to measure blurriness is analyzing the Fast Fourier Transform (FFT) which examines the frequency components to determine the sharpness in the image. Images with lower power in the high frequency components may be considered to have

In some embodiments, aesthetic metrics may also be used as quality criteria because views generated from wrong viewpoints will appear less plausible and aesthetic. Examples of aesthetic metrics are described in Y.L. Deng, "Image aesthetic assessment: An experimental survey," IEEE Signal Processing Magazine 34(4), (2017), pp. 80-106. The blur and/or aesthetic metrics can be computed for the same images generated at 104 inside the region given by the upper and lower envelopes or in new images located in this same region.

Various different resolutions may be used for the images $I_k$ in different embodiments or in different stages of the same embodiment. In case where different resolutions are possible, a process such as that of FIG. 1 may be repeated for each possible image resolution. The final range may be obtained as an intersection of the regions obtained for each resolution.

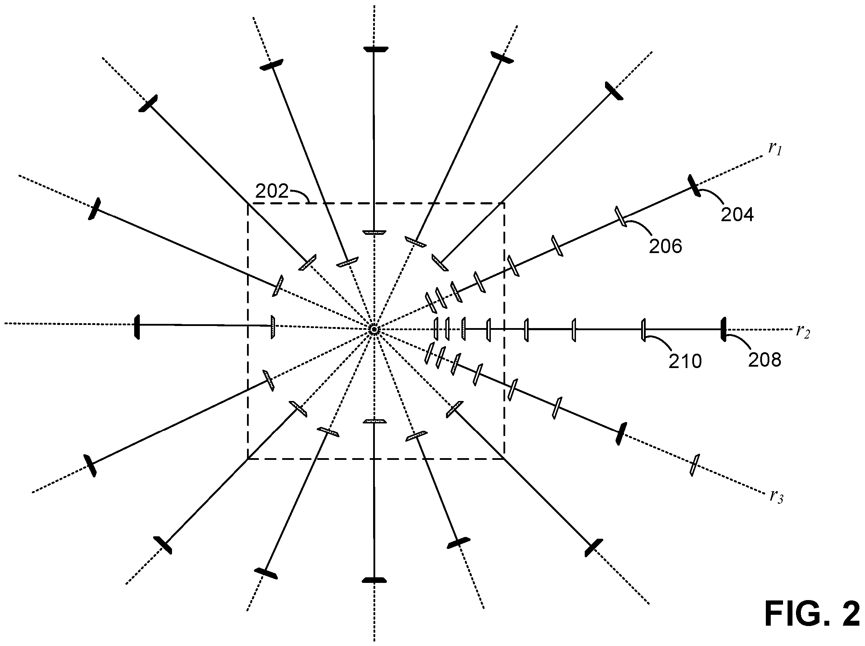

FIGs. 2-5 schematically illustrate different steps in example methods applied to a scene considering an object centric topology. The same procedure may be used for other types of scenes.

FIG. 2 schematically illustrates a bounding box together with candidate image planes and directions. The drawing is done in 2D for the sake of clarity. This drawing considers the object centric topology, but it would also be valid for other topologies. The square 202 represents the bounding box. From the center of the bounding box, different directions such as $r_1$, $r_2$, and $r_3$ have been considered. For each direction, different images have been generated. For example, for direction $r_1$, image planes 204 and 206, among others, may be generated. For direction $r_2$, image planes 208 and 210, among others, may be generated, and so on. Each image plane is orthonormal to the corresponding direction and is placed at a different distance from the bounding box center. An upper-bound envelope is found by considering the set of all images $I_{k=kmax(r)}$ in all directions (black-filled image planes in the drawing). The lower-bound envelope is estimated as the set of all images $I_{k=kmin(r)}$ in all directions (image planes indicated with dotted filling in the drawing). Finally, considering the region given by the upper and lower envelopes, the potential region may be refined using blur or aesthetic metrics or other quality criterion.

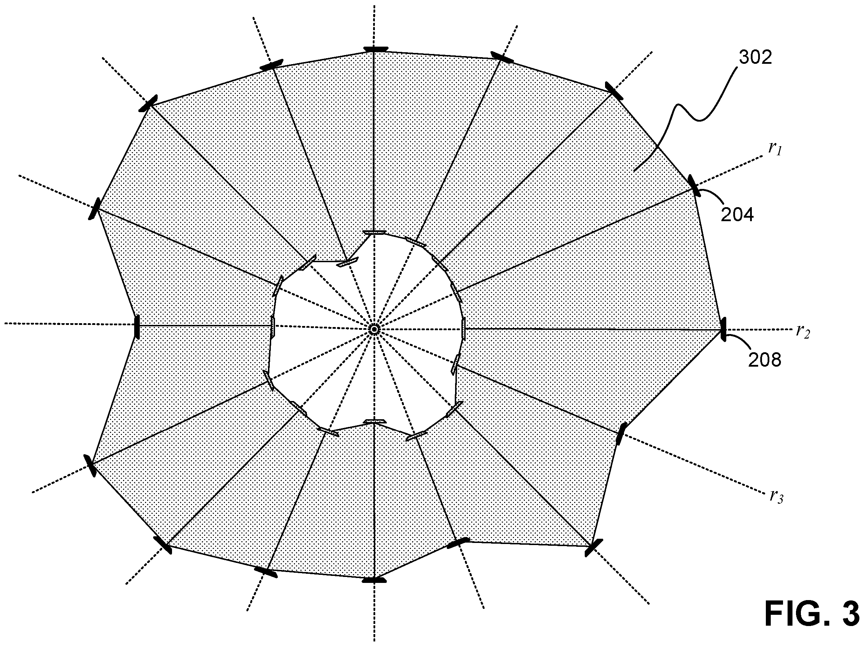

FIG. 3 illustrates the region 302 (the shaded area) defined by the upper and lower bound envelopes as determined according to FIG. 2. It is inside this region 302 that blur and aesthetic metrics or other quality metrics may be computed to refine the region.

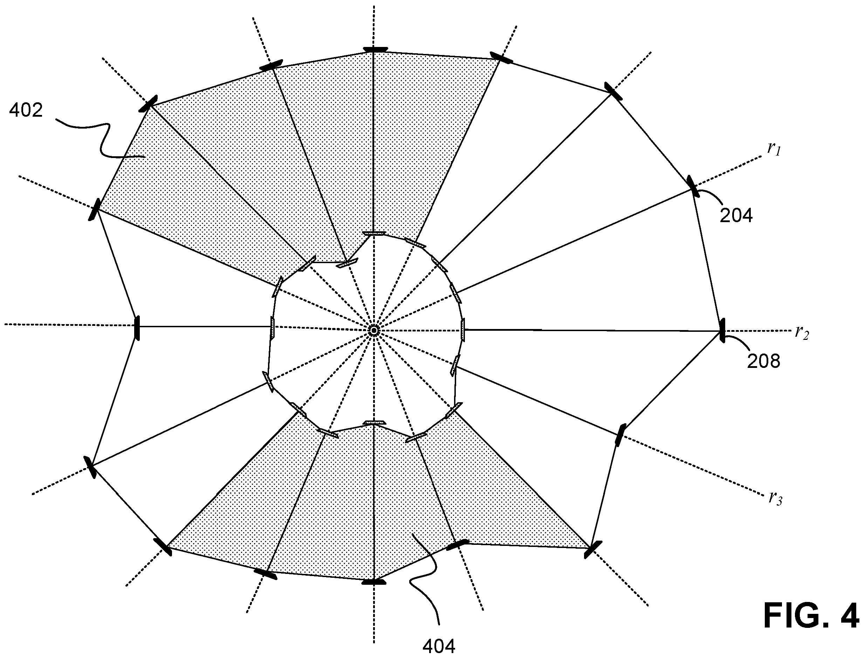

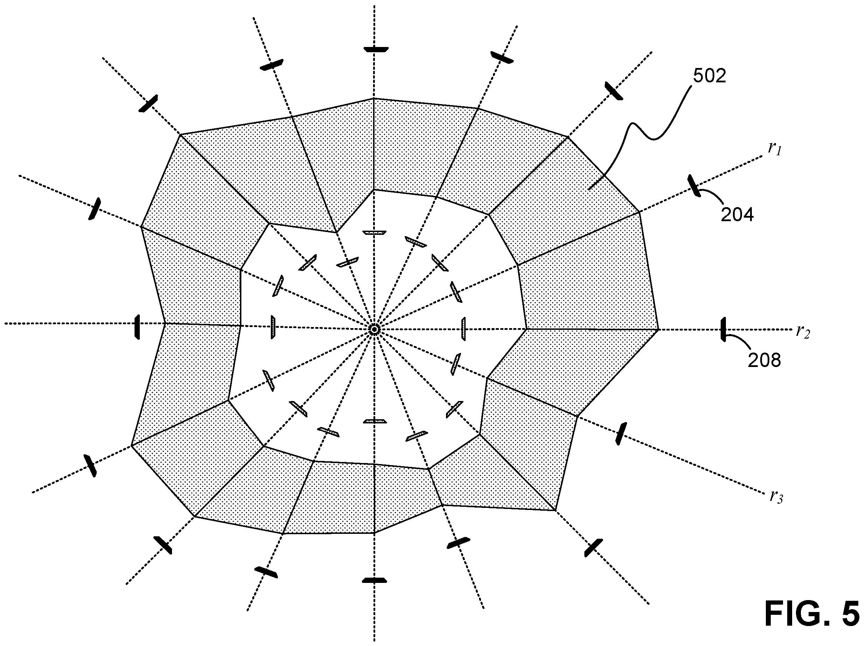

FIG. 4 illustrates one example of a refined region 402, 404 (the shaded area). The refined region is not necessarily contiguous, as seen in FIG. 4. The initial region 302 considered in FIG. 3 has been decreased after considering blur, aesthetic, and/or other quality measures. FIG. 5 illustrates another example of a refined region 502 that may be obtained by refining an initial region 302 using blur and aesthetic or other quality measures. Note that the refined regions do not have any specific shape constraint.

In an example embodiment, refined regions such as the combined region 402, 404, or the region 502, are considered as the most plausible viewpoint positions from where the original images were captured.

Example embodiments allow input views to be generated even when the compression task is agnostic of the capture. Such estimated input views can considerably help during the preprocessing and the compression task.

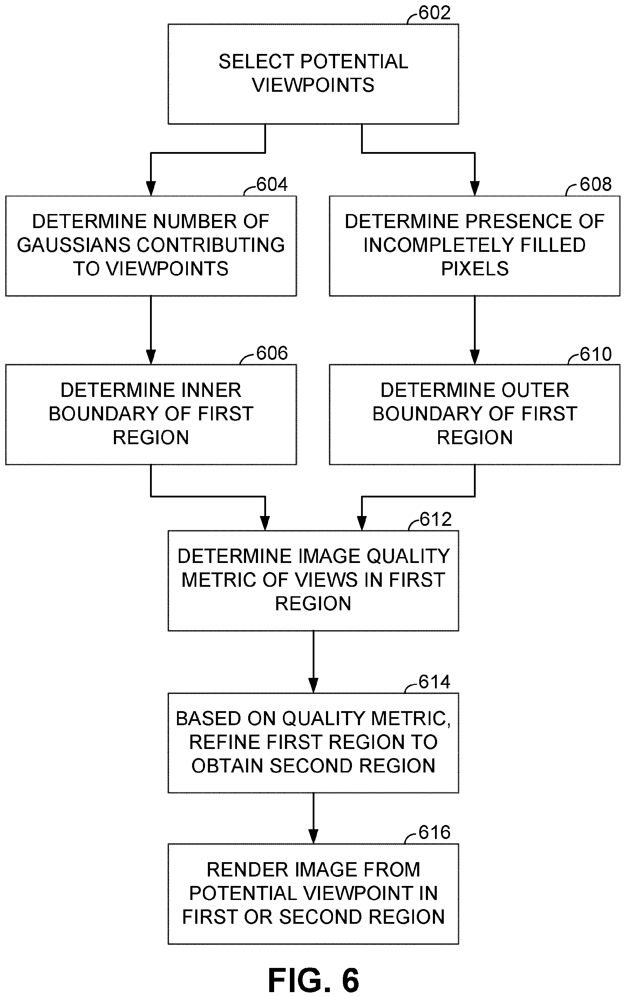

FIG. 6 illustrates a method performed in some embodiments. The method may be used on a 3D Gaussian model to estimate the positions of viewpoints that were captured (e.g. using a camera directed at a physical scene) to generate the 3D Gaussian model. The method may be particularly useful in cases where the 3D Gaussian model is represented using a capture-agnostic compression framework. At 602, a selection is made of a plurality of potential viewpoints of a model.

In some embodiments, the selection of potential viewpoints is based in part on the selection of a center point of the model. In some embodiments, the center point of the model is selected to be a center point of a bounding box containing the model. In other embodiments, different techniques may be used to select the center point, for example by calculating an average of the positions of the Gaussians in the model. The average may be a weighted average (e.g. weighted by size, opacity, or other property or combination of properties). In some embodiments, some or all of the selected potential viewpoints are directed toward the selected center point of the model. In other embodiments, different potential viewpoints are not necessarily all directed toward the same point.

In some embodiments, the selection of potential viewpoints is based in part on the selection of a plurality of rays extending from the selected center point. A plurality of the potential viewpoints may be arranged along each ray. In some embodiments, the potential viewpoints are arranged at equal intervals along each ray, e.g. viewpoints with index $i$ may be arranged at distances $d = ai + b$ from the center point, where $a$ and $b$ are distance constants. In some embodiments, the potential viewpoints are arranged with closer spacing nearer the center point and wider spacing farther from the center point. For example, potential viewpoints with index $i$ may be arranged at distances $d = c \cdot 2^i$ from the center point, where $c$ is a distance constant. As an example, with c=0.125 starting with $i = 0$, the potential viewpoints may be arranged at distances $d = 0.125, 0.25, 0.5, 1.0, 2.0, 4.0 \ldots.$ Other formulas may alternatively be used. In some embodiments, the distances of the potential viewpoints from the selected center point of the model are selected randomly (with a suitable range) or are at least partially randomized.

In some embodiments, each potential viewpoint is represented by an image plane perpendicular to a respective one of the plurality of the plurality of rays, as illustrated for example in FIGs. 2-5.

At 604, for at least a first subset of the plurality of potential viewpoints, a first determination is made of the number of 3D Gaussians contributing to rendering of a synthetic view at the respective viewpoint. A first region of potential captured viewpoints is determined based at least in part on this first determination. For example, at 606, an inner bound of the first region is determined based at least in part on the first determination.

In some embodiments, determining the inner bound of the first region includes determining, from among a plurality of the potential viewpoints in the first subset, a maximum value of the number of 3D Gaussians contributing to rendering of the respective synthetic views, and using, as at least one inner bound of the first region, an innermost potential viewpoint having the maximum value of the number of 3D Gaussians. In some cases, the first subset may include only the potential viewpoints along a single one of the selected rays. In such cases, the determination may be repeated for each of the rays, with a new maximum number of contributing 3D Gaussians being determined along each of the rays and a new inner bound of the first region likewise being determined along each of the rays.

In some embodiments, determining the innermost potential viewpoint having the maximum value of the number of 3D Gaussians includes rendering all of the potential viewpoints in the first subset and determining the number of 3D Gaussians contributing to each of the rendered viewpoints. However, some embodiments operate without fully rendering all of the potential viewpoints. For example, the number of 3D Gaussians contributing to a viewpoint may be determined without fully rendering that viewpoint. In some embodiments, heuristics may be used to avoid needing to perform calculations at all potential viewpoints. For example, the number of contributing 3D Gaussians may be determined for an innermost one of the potential viewpoints, and for successive potential viewpoints moving outward, until the resulting number of contributing 3D Gaussians is no longer increasing. It may then be assumed in some embodiments that further potential viewpoints, moving outward, do not have a greater number of contributing 3D Gaussians.

At 608, for at least a second subset of the plurality of potential viewpoints, a second determination is made of whether any incompletely filled pixels are present in a rendering of a synthetic view at the respective viewpoint. (The second subset may overlap some or all of the first subset described above.) The first region of potential captured viewpoints is determined based at least in part on this second determination. For example, at 610, an outer bound of the first region is based at least in part on the second determination.

In some embodiments, determining the outer bound of the first region includes determining, from among a plurality of the potential viewpoints in the second subset, an outermost one of the potential viewpoints having no incompletely filled pixels, and using, as at least one outer bound of the first region, the outermost one of the potential viewpoints having no incompletely filled pixels. In some embodiments, an image may be considered to have no incompletely filled pixels in a case where only a small number of pixels (e.g. below a threshold number of pixels) are incompletely filled.

In some embodiments, the amount of fill of a pixel is determined by calculating the Gaussian contribution $GCI_k$ at the pixel, as described above. In some embodiments, a pixel is considered to be incompletely filled if it has a value $GCI_k$ at the pixel that is less than 1.0. In some embodiments, a pixel is considered to be incompletely filled if it has a value $GCI_k$ at the pixel that is less than a threshold value, e.g. 0.99, 0.98, 0.97, or some other threshold value. The threshold value may be variable based on the model and/or on the view rendering technique.

In example embodiments, the first region is, in cross section, a generally ring-shaped region with an inner perimeter defined by the determined inner bound and an outer perimeter defined by the determined outer bound.

In some but not necessarily all embodiments, the first region is refined to obtain a second region of potential captured viewpoints. In some such embodiments, the refining includes rendering a plurality of synthetic views using a third subset of the plurality of potential viewpoints within the first region. (The third subset of potential viewpoints may overlap the first and/or second subsets described above.) At 612, for each of the synthetic views rendered using the third subset of potential viewpoints, a respective image quality metric is determined. At 614, the second region of potential captured viewpoints is selected based on the image quality metric of the respective synthetic views in the third subset. For example, the second region of potential captured viewpoints may be selected to include viewpoints having a highest quality according to the image quality metric.

In some embodiments, the image quality metric is a blur metric, with a lower blur having higher quality. In some embodiments, the image quality metric is an aesthetic metric. In some embodiments, the quality metric is a combination (e.g. a weighted average) of two or more metrics.

In some embodiments, a viewpoint is selected within the first or second region of captured viewpoints, and at 616 an image is rendered from that selected viewpoint. While the use of 3D Gaussians allows for synthesizing views from many different viewpoints, views rendered from viewpoints within the first and/or second regions as described herein are likely to approximate captured views that were used to generate the model in the first place and are likely to have higher quality than synthetic views from arbitrarily-selected locations.

Example embodiments further include an apparatus comprising one or more processors configured to perform any of the methods described herein.

### Example systems

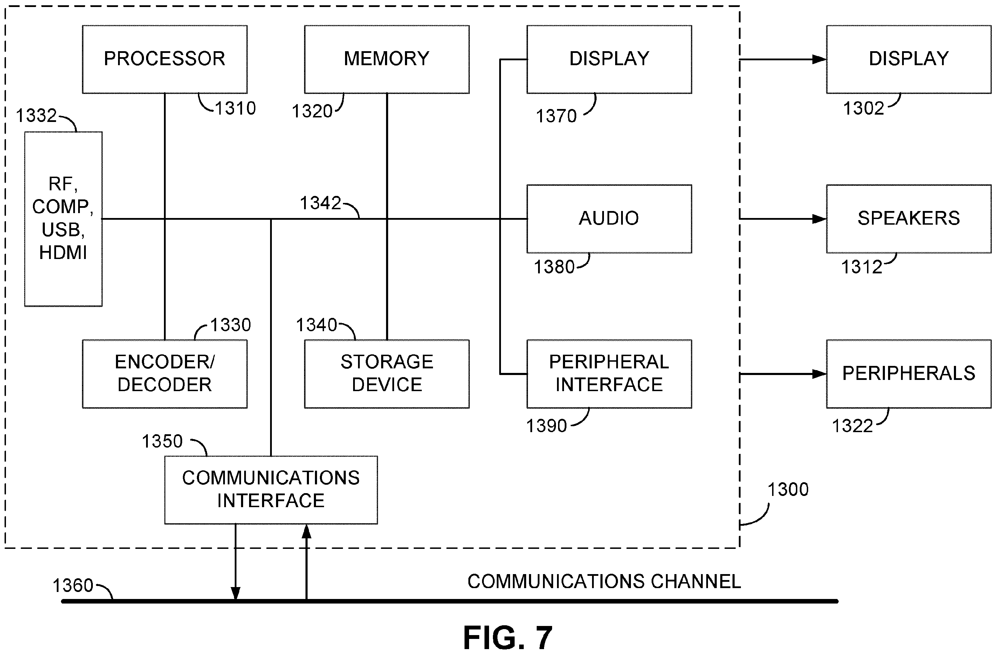

Some embodiments may be implemented on a system of one or more processors as illustrated in FIG. 7. FIG. 7 is a block diagram of an example of a system in which various aspects and embodiments are implemented. System 1300 can be embodied as a device including the various components described below and is configured to perform one or more of the aspects described in this document. Examples of such devices, include, but are not limited to, various electronic devices such as personal computers, laptop computers, smartphones, tablet computers, digital multimedia set top boxes, digital television receivers, personal video recording systems, connected home appliances, and servers. Elements of system 1300, singly or in combination, can be embodied in a single integrated circuit (IC), multiple ICs, and/or discrete components. For example, in at least one embodiment, the processing and encoder/decoder elements of system 1300 are distributed across multiple ICs and/or discrete components. In various embodiments, the system 1300 is communicatively coupled to one or more other systems, or other electronic devices, via, for example, a communications bus or through dedicated input and/or output ports. In various embodiments, the system 1300 is configured to implement one or more of the aspects described in this document.

The system 1300 includes at least one processor 1310 configured to execute instructions loaded therein for implementing, for example, the various aspects described in this document. Processor 1310 can include embedded memory, input output interface, and various other circuitries as known in the art. The system 1300 includes at least one memory 1320 (e.g., a volatile memory device, and/or a non-volatile memory device). System 1300 includes a storage device 1340, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash, magnetic disk drive, and/or optical disk drive. The storage device 1340 can include an internal storage device, an attached storage device (including detachable and non-detachable storage devices), and/or a network accessible storage device, as non-limiting examples.

System 1300 includes an encoder/decoder module 1330 configured, for example, to process data to provide an encoded video or decoded video, and the encoder/decoder module 1330 can include its own processor and memory. The encoder/decoder module 1330 represents module(s) that can be included in a device to perform the encoding and/or decoding functions. As is known, a device can include one or both of the encoding and decoding modules. Additionally, encoder/decoder module 1330 can be implemented as a separate element of system 1300 or can be incorporated within processor 1310 as a combination of hardware and software as known to those skilled in the art.

Program code to be loaded onto processor 1310 or encoder/decoder 1330 to perform the various aspects described in this document can be stored in storage device 1340 and subsequently loaded onto memory 1320 for execution by processor 1310. In accordance with various embodiments, one or more of processor 1310, memory 1320, storage device 1340, and encoder/decoder module 1330 can store one or more of various items during the performance of the processes described in this document. Such stored items can include, but are not limited to, the input point cloud, the decoded point cloud or portions of the decoded point cloud, the bitstream, matrices, variables, and intermediate or final results from the processing of equations, formulas, operations, and operational logic.

In some embodiments, memory inside of the processor 1310 and/or the encoder/decoder module 1330 is used to store instructions and to provide working memory for processing that is needed during encoding or decoding. In other embodiments, however, a memory external to the processing device (for example, the processing device can be either the processor 1310 or the encoder/decoder module 1330) is used for one or more of these functions. The external memory can be the memory 1320 and/or the storage device 1340, for example, a dynamic volatile memory and/or a non-volatile flash memory. In several embodiments, an external non-volatile flash memory is used to store the operating system of, for example, a television. In at least one embodiment, a fast external dynamic volatile memory such as a RAM is used as working memory for video coding and decoding operations, such as for MPEG-2 (MPEG refers to the Moving Picture Experts Group, MPEG-2 is also referred to as ISO/IEC 13818, and 13818-1 is also known as H.222, and 13818-2 is also known as H.262), HEVC (HEVC refers to High Efficiency Video Coding, also known as H.265 and MPEG-H Part 2), or VVC (Versatile Video Coding, a new standard being developed by JVET, the Joint Video Experts Team).

The input to the elements of system 1300 can be provided through various input devices as indicated in block 1332. Such input devices include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High Definition Multimedia Interface (HDMI) input terminal. Other examples include composite video.

In various embodiments, the input devices of block 1332 have associated respective input processing elements as known in the art. For example, the RF portion can be associated with elements suitable for (i) selecting a desired frequency (also referred to as selecting a signal, or band-limiting a signal to a band of frequencies), (ii) downconverting the selected signal, (iii) band-limiting again to a narrower band of frequencies to select (for example) a signal frequency band which can be referred to as a channel in certain embodiments, (iv) demodulating the downconverted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, downconverting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, downconverting, and filtering again to a desired frequency band. Various embodiments rearrange the order of the above-described (and other) elements, remove some of these elements, and/or add other elements performing similar or different functions. Adding elements can include inserting elements in between existing elements, such as, for example, inserting amplifiers and an analog-to-digital converter. In various embodiments, the RF portion includes an antenna.

Additionally, the USB and/or HDMI terminals can include respective interface processors for connecting system 1300 to other electronic devices across USB and/or HDMI connections. It is to be understood that various aspects of input processing, for example, Reed-Solomon error correction, can be implemented, for example, within a separate input processing IC or within processor 1310 as necessary. Similarly, aspects of USB or HDMI interface processing can be implemented within separate interface ICs or within processor 1310 as necessary. The demodulated, error corrected, and demultiplexed stream is provided to various processing elements, including, for example, processor 1310, and encoder/decoder 1330 operating in combination with the memory and storage elements to process the datastream as necessary for presentation on an output device.

Various elements of system 1300 can be provided within an integrated housing, Within the integrated housing, the various elements can be interconnected and transmit data therebetween using suitable connection arrangement 1342, for example, an internal bus as known in the art, including the Inter-IC (I2C) bus, wiring, and printed circuit boards.

The system 1300 includes communication interface 1350 that enables communication with other devices via communication channel 1360. The communication interface 1350 can include, but is not limited to, a transceiver configured to transmit and to receive data over communication channel 1360. The communication interface 1350 can include, but is not limited to, a modem or network card and the communication channel 1360 can be implemented, for example, within a wired and/or a wireless medium.

Data is streamed, or otherwise provided, to the system 1300, in various embodiments, using a wireless network such as a Wi-Fi network, for example IEEE 802.11 (IEEE refers to the Institute of Electrical and Electronics Engineers). The Wi-Fi signal of these embodiments is received over the communications channel 1360 and the communications interface 1350 which are adapted for Wi-Fi communications. The communications channel 1360 of these embodiments is typically connected to an access point or router that provides access to external networks including the Internet for allowing streaming applications and other over-the-top communications. Other embodiments provide streamed data to the system 1300 using a set-top box that delivers the data over the HDMI connection of the input block 1332. Still other embodiments provide streamed data to the system 1300 using the RF connection of the input block 1332. As indicated above, various embodiments provide data in a non-streaming manner. Additionally, various embodiments use wireless networks other than Wi-Fi, for example a cellular network or a Bluetooth network.

The system 1300 can provide an output signal to various output devices, including a display 1302, speakers 1312, and other peripheral devices 1322. The display 1302 of various embodiments includes one or more of, for example, a touchscreen display, an organic light-emitting diode (OLED) display, a curved display, and/or a foldable display. The display 1302 can be for a television, a tablet, a laptop, a cell phone (mobile phone), or other device. The display 1302 can also be integrated with other components (for example, as in a smart phone), or separate (for example, an external monitor for a laptop). The other peripheral devices 1322 include, in various examples of embodiments, one or more of a stand-alone digital video disc (or digital versatile disc) (DVR, for both terms), a disk player, a stereo system, and/or a lighting system. Various embodiments use one or more peripheral devices 1322 that provide a function based on the output of the system 1300. For example, a disk player performs the function of playing the output of the system 1300.

In various embodiments, control signals are communicated between the system 1300 and the display 1302, speakers 1312, or other peripheral devices 1322 using signaling such as AV.Link, Consumer Electronics Control (CEC), or other communications protocols that enable device-to-device control with or without user intervention. The output devices can be communicatively coupled to system 1300 via dedicated connections through respective interfaces 1370, 1380, and 1390. Alternatively, the output devices can be connected to system 1300 using the communications channel 1360 via the communications interface 1350. The display 1302 and speakers 1312 can be integrated in a single unit with the other components of system 1300 in an electronic device such as, for example, a television. In various embodiments, the display interface 1370 includes a display driver, such as, for example, a timing controller (T Con) chip.

The display 1302 and speaker 1312 can alternatively be separate from one or more of the other components, for example, if the RF portion of input 1332 is part of a separate set-top box. In various embodiments in which the display 1302 and speakers 1312 are external components, the output signal can be provided via dedicated output connections, including, for example, HDMI ports, USB ports, or COMP outputs.

The embodiments can be carried out by computer software implemented by the processor 1310 or by hardware, or by a combination of hardware and software. As a non-limiting example, the embodiments can be implemented by one or more integrated circuits. The memory 1320 can be of any type appropriate to the technical environment and can be implemented using any appropriate data storage technology, such as optical memory devices, magnetic memory devices, semiconductor-based memory devices, fixed memory, and removable memory, as non-limiting examples. The processor 1310 can be of any type appropriate to the technical environment, and can encompass one or more of microprocessors, general purpose computers, special purpose computers, and processors based on a multi-core architecture, as non-limiting examples.

## *Further embodiments*

A method according to some embodiments comprises: selecting a plurality of potential viewpoints of a model, wherein the model is represented using a plurality of 3D Gaussians; for a first subset of the plurality of potential viewpoints, making a first determination of a number of 3D Gaussians contributing to rendering of a synthetic view at the respective viewpoint; for a second subset of the plurality of potential viewpoints, making a second determination of whether any incompletely filled pixels are present in a rendering of a synthetic view at the respective viewpoint; and determining a first region of potential captured viewpoints based at least in part on the first determination and the second determination.

An apparatus according to some embodiments comprises one or more processors configured to perform at least: selecting a plurality of potential viewpoints of a model, wherein the model is represented using a plurality of 3D Gaussians; for a first subset of the plurality of potential viewpoints, making a first determination of a number of 3D Gaussians contributing to rendering of a synthetic view at the respective viewpoint; for a second subset of the plurality of potential viewpoints, making a second determination of whether any incompletely filled pixels are present in a rendering of a synthetic view at the respective viewpoint; and determining a first region of potential captured viewpoints based at least in part on the first determination and the second determination.

In some embodiments, an inner bound of the first region is based at least in part on the first determination and an outer bound of the first region is based at least in part on the second determination.

In some embodiments, determining the first region comprises: determining, from among a plurality of the potential viewpoints in the first subset, a maximum value of the number of 3D Gaussians contributing to rendering of the respective synthetic views; and using, as at least one inner bound of the first region, an innermost potential viewpoint having the maximum value of the number of 3D Gaussians.

In some embodiments, determining the first region comprises: determining, from among a plurality of the potential viewpoints in the second subset, an outermost one of the potential viewpoints having no incompletely filled pixels; and using, as at least one outer bound of the first region, the outermost one of the potential viewpoints having no incompletely filled pixels.

In some embodiments, selecting a plurality of potential viewpoints comprises: selecting a center point of the model; and selecting a plurality of rays extending from the center point; wherein a plurality of the potential viewpoint are arranged along each ray.

In some embodiments, each of the potential viewpoints is directed toward the center point of the model.

In some embodiments, the center point of the model is selected to be a center point of a bounding box containing the model.

In some embodiments, each potential viewpoint is represented by an image plane perpendicular to a respective one of the plurality of the plurality of rays.

Some embodiments further include: selecting a viewpoint within the first region of captured viewpoints; and rendering a synthetic view at the selected viewpoint.

In some embodiments, the model is represented using a capture-agnostic compression framework.

Some embodiments further comprise refining the first region to obtain a second region of potential captured viewpoints, wherein refining the first region comprises: rendering a plurality of synthetic views using a third subset of the plurality of potential viewpoints within the first region; for each of the synthetic views rendered using the third subset of potential viewpoints, determining a respective image quality metric; and selecting the second region of potential captured viewpoints based on the image quality metric of the respective synthetic views in the third subset.

In some embodiments, the second region of potential captured viewpoints is selected to include viewpoints having a highest quality according to the image quality metric. In some embodiments, the image quality metric is a blur metric. In some embodiments, the image quality metric is an aesthetic metric.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

It is to be understood that use of any of the following "/", "and/or", and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

**Claims**

1. A method comprising:

   selecting a plurality of potential viewpoints of a model, wherein the model is represented using a plurality of 3D Gaussians;
   for a first subset of the plurality of potential viewpoints, making a first determination of a number of 3D Gaussians contributing to rendering of a synthetic view at the respective viewpoint;
   for a second subset of the plurality of potential viewpoints, making a second determination of whether any incompletely filled pixels are present in a rendering of a synthetic view at the respective viewpoint; and
   determining a first region of potential captured viewpoints based at least in part on the first determination and the second determination.

2. An apparatus comprising one or more processors configured to perform at least:

   selecting a plurality of potential viewpoints of a model, wherein the model is represented using a plurality of 3D Gaussians;
   for a first subset of the plurality of potential viewpoints, making a first determination of a number of 3D Gaussians contributing to rendering of a synthetic view at the respective viewpoint;
   for a second subset of the plurality of potential viewpoints, making a second determination of whether any incompletely filled pixels are present in a rendering of a synthetic view at the respective viewpoint; and
   determining a first region of potential captured viewpoints based at least in part on the first determination and the second determination.

3. The method of claim 1, or the apparatus of claim 2, wherein an inner bound of the first region is based at least in part on the first determination and an outer bound of the first region is based at least in part on the second determination.

4. The method of claim 1, or claim 3 as it depends from claim 1, or the apparatus of claim 2, or claim 3 as it depends from claim 2, wherein determining the first region comprises:

   determining, from among a plurality of the potential viewpoints in the first subset, a maximum value of the number of 3D Gaussians contributing to rendering of the respective synthetic views; and
   using, as at least one inner bound of the first region, an innermost potential viewpoint having the maximum value of the number of 3D Gaussians.

5. The method of claim 1, or claims 3-4 as they depend from claim 1, or the apparatus of claim 2, or claims 3-4 as they depend from claim 2, wherein determining the first region comprises:

   determining, from among a plurality of the potential viewpoints in the second subset, an outermost one of the potential viewpoints having no incompletely filled pixels; and
   using, as at least one outer bound of the first region, the outermost one of the potential viewpoints having no incompletely filled pixels.

6. The method of claim 1, or claims 3-6 as they depend from claim 1, or the apparatus of claim 2, or claims 3-5 as they depend from claim 2, wherein selecting a plurality of potential viewpoints comprises:

   selecting a center point of the model; and

selecting a plurality of rays extending from the center point;
wherein a plurality of the potential viewpoint are arranged along each ray.

7. The method of claim 6 as it depends from claim 1, or the apparatus of claim 6 as it depends from claim 2, wherein each of the potential viewpoints is directed toward the center point of the model.

8. The method of claim 6 or 7 as they depend from claim 1, or the apparatus of claim 6 or 7 as they depend from claim 2, wherein the center point of the model is selected to be a center point of a bounding box containing the model.

9. The method of any of claims 6-8 as they depend from claim 1, or the apparatus of any of claims 6-8 as they depend from claim 2, wherein each potential viewpoint is represented by an image plane perpendicular to a respective one of the plurality of the plurality of rays.

10. The method of claim 1, or any of claims 3-9 as they depend from claim 1, or the apparatus of claim 2, or any of claims 3-9 as they depend from claim 2, further comprising:

    selecting a viewpoint within the first region of captured viewpoints; and
    rendering a synthetic view at the selected viewpoint.

11. The method of claim 1, or any of claims 3-10 as they depend from claim 1, or the apparatus of claim 2, or any of claims 3-10 as they depend from claim 2, wherein the model is represented using a capture-agnostic compression framework.

12. The method of claim 1, or any of claims 3-11 as they depend from claim 1, or the apparatus of claim 2, or any of claims 3-11 as they depend from claim 2, further comprising refining the first region to obtain a second region of potential captured viewpoints, wherein refining the first region comprises:

    rendering a plurality of synthetic views using a third subset of the plurality of potential viewpoints within the first region;
    for each of the synthetic views rendered using the third subset of potential viewpoints, determining a respective image quality metric; and
    selecting the second region of potential captured viewpoints based on the image quality metric of the respective synthetic views in the third subset.

13. The method of claim 12 as it depends from claim 1, or the apparatus of claim 12 as it depends from claim 2, wherein the second region of potential captured viewpoints is selected to include viewpoints having a highest quality according to the image quality metric.

14. The method of claim 12 or 13 as they depend from claim 1, or the apparatus of claim 12 or 13 as they depend from claim 2, wherein the image quality metric is a blur metric.

15. The method of claim 12 or 13 as they depend from claim 1, or the apparatus of claim 12 or 13 as they depend from claim 2, wherein the image quality metric is an aesthetic metric.

OBTAIN BOUNDING BOX
INFORMATION — 101

↓

DETERMINE CENTER OF
BOUNDING BOX — 102

↓

SELECT DIRECTIONS
AND IMAGE PLANES — 103

↓

RENDER VIEWS AT
IMAGE PLANES — 104

↓

DETERMINE GAUSSIAN
CONTRIBUTIONS — 105

↓

DISCARD VIEWS WITH
EMPTY PIXELS — 106

↓

COUNT CONTRIBUTING
GAUSSIANS — 107

↓

APPLY QUALITY
CRITERON — 108

# FIG. 1

FIG. 2

FIG. 3

FIG. 4

EP 4 779 568 A1

FIG. 5

```
                                          ┌─602
              ┌──────────────────────────────────┐
              │                                   │
              │        SELECT POTENTIAL           │
              │          VIEWPOINTS               │
              │                                   │
              └──────────────────────────────────┘
```

┌─604

DETERMINE NUMBER OF
GAUSSIANS CONTRIBUTING
TO VIEWPOINTS

┌─608

DETERMINE PRESENCE OF
INCOMPLETELY FILLED
PIXELS

┌─606

DETERMINE INNER
BOUNDARY OF FIRST
REGION

┌─610

DETERMINE OUTER
BOUNDARY OF FIRST
REGION

┌─612

DETERMINE IMAGE QUALITY
METRIC OF VIEWS IN FIRST
REGION

┌─614

BASED ON QUALITY METRIC,
REFINE FIRST REGION TO
OBTAIN SECOND REGION

┌─616

RENDER IMAGE FROM
POTENTIAL VIEWPOINT IN
FIRST OR SECOND REGION

## FIG. 6

**FIG. 7**

EP 4 779 568 A1

Europäisches
Patentamt

European
Patent Office

Office européen
des brevets

# EUROPEAN SEARCH REPORT

**Application Number**

EP 25 30 5052

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Xu Jiale ET AL: "FreeSplatter: Pose-free Gaussian Splatting for Sparse-view 3D Reconstruction", arXiv.org, 1 December 2024 (2024-12-01), pages 1-28, XP093284114, Retrieved from the Internet: URL:https://arxiv.org/pdf/2412.09573 | 1-11 | INV. G06T7/73 G06N3/045 G06T17/00 |
| Y | * 3, 3.2, 3.3 * | 12-15 | |
| Y | ANURAG DALAL ET AL: "Gaussian Splatting: 3D Reconstruction and Novel View Synthesis, a Review", ARXIV.ORG, CORNELL UNIVERSITY LIBRARY, 201 OLIN LIBRARY CORNELL UNIVERSITY ITHACA, NY 14853, 6 May 2024 (2024-05-06), XP091748964, * III.B * | 12-15 | |
| A | LI HAO ET AL: "GGRt: Towards Pose-Free Generalizable 3D Gaussian Splatting in Real-Time", 1 November 2024 (2024-11-01), COMPUTER VISION - ECCV 2024; [LECTURE NOTES IN COMPUTER SCIENCE; LECT.NOTES COMPUTER], SPRINGER NATURE SWITZERLAND, CHAM, PAGE(S) 325 - 341, XP047724534, ISSN: 0302-9743 ISBN: 978-3-031-73208-9 [retrieved on 2024-11-01] * abstract * | 1,2 | **TECHNICAL FIELDS SEARCHED (IPC)** G06T G06N |

-/--

The present search report has been drawn up for all claims

| Place of search | Date of completion of the search | Examiner |
|---|---|---|
| The Hague | 5 June 2025 | Cooke, Edward |

| | Europäisches Patentamt<br>European Patent Office<br>Office européen des brevets | **EUROPEAN SEARCH REPORT** | Application Number<br>**EP 25 30 5052** |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | YUANZHENG WU ET AL: "3D Gaussian Splatting for Large-scale 3D Surface Reconstruction from Aerial Images", ARXIV.ORG, CORNELL UNIVERSITY LIBRARY, 201 OLIN LIBRARY CORNELL UNIVERSITY ITHACA, NY 14853, 31 August 2024 (2024-08-31), XP091864243, * abstract * ----- | 1,2 | |
| A | MONICA M Q LI ET AL: "Frequency-based View Selection in Gaussian Splatting Reconstruction", ARXIV.ORG, CORNELL UNIVERSITY LIBRARY, 201 OLIN LIBRARY CORNELL UNIVERSITY ITHACA, NY 14853, 24 September 2024 (2024-09-24), XP091890043, * abstract * ----- | 1,2 | |
| A | SCHMIDT CHRISTIAN ET AL: "Look Gauss, No Pose: Novel View Synthesis using Gaussian Splatting without Accurate Pose Initialization", 2024 IEEE/RSJ INTERNATIONAL CONFERENCE ON INTELLIGENT ROBOTS AND SYSTEMS (IROS), IEEE, 14 October 2024 (2024-10-14), pages 8732-8739, XP034808381, DOI: 10.1109/IROS58592.2024.10801639 [retrieved on 2024-12-25] * abstract * ----- | 1,2 | TECHNICAL FIELDS SEARCHED (IPC) |
| | -/-- | | |

The present search report has been drawn up for all claims

| Place of search | Date of completion of the search | Examiner |
|---|---|---|
| The Hague | 5 June 2025 | Cooke, Edward |

EPO FORM 1503 03.82 (P04C01)

European Patent Office

**EUROPEAN SEARCH REPORT**

Application Number

EP 25 30 5052

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | NIEDERMAYR SIMON ET AL: "Compressed 3D Gaussian Splatting for Accelerated Novel View Synthesis", 2024 IEEE/CVF CONFERENCE ON COMPUTER VISION AND PATTERN RECOGNITION (CVPR), IEEE, 16 June 2024 (2024-06-16), pages 10349-10358, XP034696050, DOI: 10.1109/CVPR52733.2024.00985 [retrieved on 2024-09-16] * abstract * | 1,2 | |
| A | YUAN SUN ET AL: "iComMa: Inverting 3D Gaussian Splatting for Camera Pose Estimation via Comparing and Matching", ARXIV.ORG, CORNELL UNIVERSITY LIBRARY, 201 OLIN LIBRARY CORNELL UNIVERSITY ITHACA, NY 14853, 20 March 2024 (2024-03-20), XP091704895, * abstract * | 1,2 | |
| A | JIANG KAIWEN ET AL: "A Construct-Optimize Approach to Sparse View Synthesis without Camera Pose", PROCEEDINGS OF THE 27TH ACM INTERNATIONAL CONFERENCE ON HYBRID SYSTEMS: COMPUTATION AND CONTROL, ACMPUB27, NEW YORK, NY, USA, 13 July 2024 (2024-07-13), pages 1-11, XP059723177, DOI: 10.1145/3641519.3657427 ISBN: 979-8-4007-0530-4 * abstract * | 1,2 | TECHNICAL FIELDS SEARCHED (IPC) |

The present search report has been drawn up for all claims

| Place of search | Date of completion of the search | Examiner |
|---|---|---|
| The Hague | 5 June 2025 | Cooke, Edward |

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **KERBL, B. K.** 3D Gaussian Splatting for Real-Time Radiance Field Rendering. *ACM Transactions on Graphics (TOG)*, 2003, 1-14

- **Y.L. DENG**. Image aesthetic assessment: An experimental survey. *IEEE Signal Processing Magazine*, 2017, vol. 34 (4), 80-106